# EUROPEAN PATENT APPLICATION

(11) **EP 0 677 909 A2**
(43) Date of publication of application: **18.10.1995**
(21) Application number: 95200914.0
(22) Date of filing: 11.04.1995
(51) Int. Cl.: H02H 3/33

(54) **Method and electronic protective device for electrical equipment, in particular for hydromassage baths, saunas, showers and mini-pools**

(30) Priority: 13.04.1994 IT MI940688
(71) Applicant: TEUCO GUZZINI S.r.l., I-62019 Recanati (Macerata) (IT)
(72) Inventor: Guzzini, Virgilio, I-62019 Recanati, (Macerata) (IT)
(74) Representative: Faraggiana, Vittorio, Dr. Ing.

(57) **Abstract**

A method and an electrical protective device against leakage of current in an apparatus (13) powered by an electric network (11, 11), in particular a sanitary appliance, comprise the measurement by means of a differential detector (16) of currents absorbed along two power supply conductors of the apparatus. Upon detecting a difference in current above a pre-established threshold (24, 25) the apparatus (13) being disconnected. A testing element (30, 31) being operatable to induce the differential detector (16) to emit a difference value (18) above said first threshold value (24), so as to test the functioning of the protective device. Upon operation of the testing element (30, 31) a timer (56) being operated which emits a signal for repetition of the test after a pre-established period of time.

## Description

This invention refers to an electronic protective device, which moreover emits signals and disconnects the electric power supply to an interlocked apparatus, when the electrical safety in such apparatus drops below pre-established limits.

A device of this kind is particularly designed for use with sanitary appliances such as hydromassage baths, saunas, shower cabins, mini-pools, etc..

In the known technique, the potential risks related to the use of electrical equipment in which the human body comes into contact with water are well known. Although considerable passive precautions are taken, such as paying special attention to electrical insulation and to sealing against infiltration of water into electrical parts, the failure of electrical or hydraulic parts can result in danger for the user. It is consequently essential to provide active safety devices which are capable of detecting conditions considered to be of potential danger, and of providing suitable countermeasures whenever such conditions occur.

A known device, essential for purposes of safety, is the differential switch, which cuts off the electrical power supply to the interlocked apparatus whenever it detects dyssimmetry between the currents flowing through the two power supply conductors, indicating a failure of the electrical insulation of the apparatus with a consequent leakage of current to earth. The known differential switches usually have an operating threshold which is pre-established as being the maximum permissible leakage without excessive risks for the user.

Said known devices however present numerous drawbacks, which can diminish or reduce their efficiency to zero under critical conditions.

For example, the contacts of the remote control switch interlocked with the differential switch usually remain closed for long periods of time and are traversed by relatively high currents, with the result that "sticking" or welding may occur between the contacts, which remain unalerted and prevent the differential switch from promptly disconnecting the apparatus under control upon detection of a potentially dangerous leakage.

Although insulation losses usually take place gradually over time, the operating threshold of the differential switch may be passed upon final and complete rupture of the insulation which has become deteriorated over time. The leakage current can consequently undergo a sudden and violent maximum peak, giving rise to a situation of extreme danger due to the inevitable and unsuppressable operating inertia of the differential switch.

Lastly, any failure in the differential switch which prevents it from operating, passes completely unobserved and because the switch fails to come into action the user erroneously presumes that the apparatus under control is safe.

In order to obviate this problem and, at least partially, the problem of sticking contacts, certain differential switches are provided with a testing button which produces a fictitious condition of leakage. When the testing button is pressed, the differential, if efficient, must cut off the supply of power to the interlocked apparatus as though an effective leakage had occurred in the latter.

Unfortunately, it is rare for the user to test the differential switch periodically, since it is easy to completely forget that the testing button even exists. The general scope of this invention is to obviate the aforementioned problems by providing a method and an electronic protective device whereby it is possible to immediately detect diverse irregular operating conditions, and to constantly ensure the prompt and efficient intervention of the protection in the event of potential danger.

This scope is achieved, according to the invention, by providing a method for electrical protection against current leakages in an apparatus powered by an electrical network, in particular a sanitary appliance, comprising the steps of:
- measuring the differential value of the currents absorbed along two power supply conductors of the apparatus;
- comparing the differential value with a pre-defined first threshold value which is pre-established as being the maximum acceptable leakage value;
- disconnecting the apparatus from the electrical network when the differential value exceeds the first threshold value;
   the method comprising the further steps of:
- inducing a difference value higher than said first threshold value to test the correct occurrence of the disconnection;
- starting up a timer upon induction of the difference value, the timer emitting a time lapsed signal when a pre-established period of time has elapsed after its start up.

A device is also provided, according to this method, for electrical protection against current leakages in an apparatus powered by an electrical network, in particular a sanitary appliance, comprising a differential detector of the currents absorbed along two power supply conductors of the apparatus, the differential detector having an output representing a difference value of said absorbed currents, a comparator comparing said difference value with a first threshold value which is pre-established as being the maximum acceptable leakage value and emitting a first alarm signal when the difference value exceeds said threshold value, the alarm signal actuating a device for disconnecting the apparatus from the electrical network, a testing element having an actuating control to induce the differential detector to emit a difference value higher than said first threshold value, characterized by the fact that the operation of the testing element produces a signal for starting up a timer, the timer emitting a time lapsed signal when a pre-established period of time has elapsed after its start up, in order to indicate the need to carry out a further operation of the testing element after the pre-established time has elapsed.

The innovative principles of this invention and its advantages with respect to the known technique will be more clearly evident from the following description of a possible exemplificative embodiment applying such principles, with reference to the sole accompanying drawing.

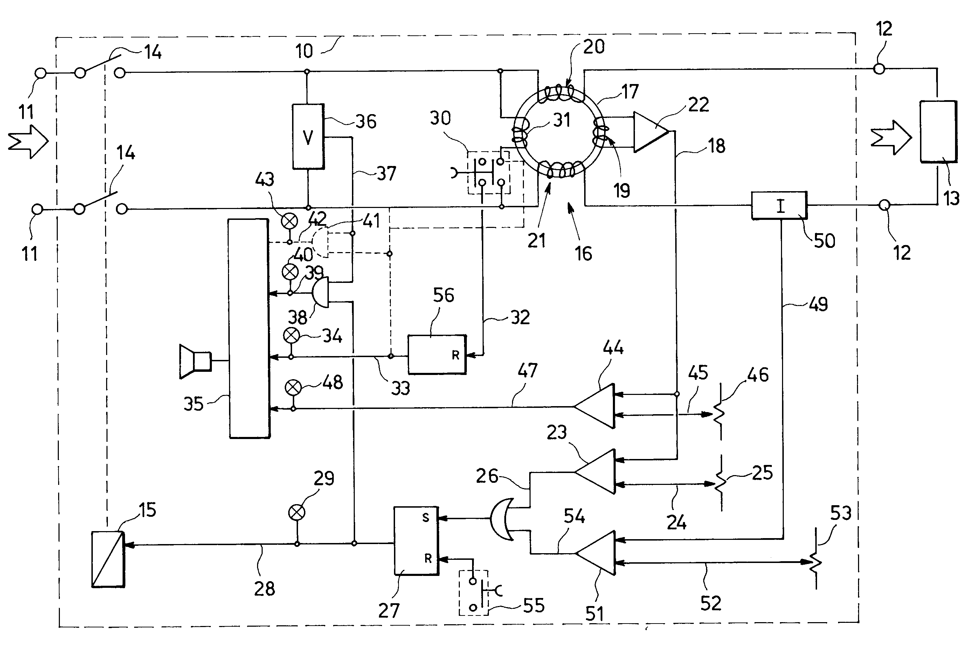

The figure shows a schematic drawing of a protective device 10 according to the invention. On the basis of the diagram shown and the following description, the technical expert in the art will easily be able to imagine practical embodiments of the device, the individual components thereof being of substantially known technique.

The device 10 comprises input terminals 11 for connection to an electric power supply network and output terminals 12 for connection to an electric apparatus 13 to be powered. The apparatus 13 can, in particular, be a sanitary appliance, such as a sauna, a shower, a hydromassage bath, a mini-pool, etc.. Such apparatus is not shown in detail since it is easily imaginable by the expert in the art.

Along the power supply conductors disposed between the input terminals and output terminals, the device 10 comprises, in series, contacts 14 of a remote control switch 15 and a known differential current detector 16 which emits an electric signal 18 in relation to the disproportion between the currents traversing the power supply conductors.

The detector 16 may be of the magnetic type, composed of two windings 20, 21 each traversed by the current flowing to one of the output terminals 12. The two windings are magnetically linked to each other by means of a closed loop magnetic circuit 17. Disposed along the magnetic circuit 17 is a detection winding 19 which in turn is linked with the magnetic field produced, with opposing polarities, by the two windings 20 and 21. A voltage proportional to the difference in the currents flowing through the two conductors disposed between the input and output terminals is thus induced in the detection winding 19. Said voltage, appropriately amplified and devoid of its sign by an amplifier 22, constitutes the signal 18.

This signal is transmitted to a comparator 23, which compares it with a threshold value 24, representing the maximum acceptable leakage value before operation of the differential switch. This threshold value can be pre-established by means of a regulator 25, for example factory set for the particular use. A typical maximum permissible leakage value can be for example 30 mA.

The comparator 23 emits a danger signal 26 when the detected current leakage exceeds the threshold pre-established by the regulator 25. Said danger signal is sent to a monostable 27, whose output 28 controls the remote control switch 15.

When the differential circuit detects a leakage current above the threshold pre-established by the regulator 25, the remote control switch is operated to open the contacts 14 to disconnect the apparatus 13. The danger condition can be visually indicated by means of a warning light 29, activated by the control signal of the remote control switch. Once the cause of the leakage has been removed, the remote control switch can be reset by pressing a reset button 55 which sets the monostable 27 to zero.

The differential detector 16 also comprises a test button 30 which simulates the electrical conditions in which the protective device must come into operation, producing a sufficient degree of fictitious unbalance in the detector as to activate the differential switch. For example, the unbalance can be achieved by supplying power to an auxiliary winding 31 which produces an appropriate magnetic flow linked to the detection winding 19, or a load can be inserted which provides an unbalanced absorption through the two windings 20, 21.

Up to this point, the differential switch described is of substantially known technique.

According to the innovative principles of this invention, the device 10 comprises a timer 56 which receives a zero-setting and starting signal 32 upon pressure of the testing button 30 to emit a warning signal 33 after a pre-established period of time considered as being the maximum acceptable period of time between two operating tests.

The warning signal 33 can control an optical indicator 34 and an acoustic indicator 35. In this way, after a pre-established period of time (for example, one month) after the last operating test, it is the device itself which warns the user of the advisability of carrying out a further test.

The device 10 also comprises a detector which indicates the effective opening of the contacts 14 whenever there is an irregular absorption of current by the load 13, the opening detector informing the control device whenever the opening command transmitted to the remote control switch does not correspond to the effective opening of the contacts 14.

For example, the opening detector can be achieved by means of a voltage detector 36 (of a known type and therefore not shown in detail), disposed downstream to the switches 14 and having an output 37 that emits a signal when there is voltage on the line downstream to the contacts 14. A logic comparator 38 emits an alarm signal 39 in the event of the simultaneous presence of the signal 37 indicating voltage on the line and the signal 28 controlling the remote control switch 15 to open the contacts 14. In fact, such contemporaneousness of signals, which under normal conditions should never ever occur, indicates that the contacts of the remote control switch have not opened despite the control transmitted by the device, due either to failure of the solenoid valve or its control circuit, or to "sticking of the contacts".

The alarm signal 39 thus generated controls an optical indicator 40 and the acoustic indicator 35, to warn the user of the situation of potential danger.

It is also possible (as indicated by the broken line in the figure) to contemplate connecting the warning signal 33 directly to the testing circuit 31, so that the testing function becomes fully automatic, after the pre-established time has elapsed the timer releasing the differential as though the testing button had been pressed. The fact that the differential was released as a result of a test and not due to malfunctioning is indicated by the indicator devices 34 and 35. In the event of automatic testing, a further logic comparator 41 can be provided to emit an alarm signal 42, whenever it detects the simultaneous presence of the signal 37 indicating the presence of voltage on the line and the signal 33 indicating that the test is being carried out. This simultaneous presence of signals in fact indicates that the automatic test has not worked, the contacts 14 having stayed closed despite the operation of the test winding.

The "test failed" alarm signal 42 can control an optical display 43 and the acoustic indicator 35.

The optical displays 34, 40, 43 in substance form an efficacious system for advance warning of potentially dangerous conditions, by indicating, respectively, the need to carry out the functioning test, the non-opening of the contacts for disconnection of the apparatus under control, and failure of the test (especially in the event of automatic testing).

The device 10 can also comprise a further indicator for advance warning of a potentially dangerous situation, achieved by means of a second comparator 44, which compares the output signal 18 from the leakage detector 16 with a threshold value 45, representing a pre-alarm leakage value, that is to say not yet considered dangerous, but already deviating from normality. This pre-alarm threshold value can be pre-established by means of a regulator 46, for example factory set for the particular application. A typical value can be for example 10 mA. The pre-alarm signal 47 emitted by the comparator 44 activates an optical indicator 48 and the acoustic indicator 35.

In this way, the user is informed at the slightest sign of current leakage which, although not requiring immediate disconnection of the apparatus, calls for the adoption of suitable measures, such as calling in a technician to repair the fault, before the situation gets worse and reaches the danger threshold which involves the automatic disconnection of the input voltage.

A further protection, easily insertable in the device 10 is a protection against overload, a signal 49, coming from a known sensor 50 of the current absorbed by the load 13, being sent to a third comparator 51, which compares the signal 49 (as a function of the current absorbed by the load) with a threshold value 52 preset by means of a regulator 53. The comparator 51 sends the signal 54 to the monostable 27, so as to control the opening of the remote control switch in a similar way to the comparator 23. The regulator 53 is adjusted beforehand for the maximum current that the load 13 absorbs under normal operating conditions. Any irregular absorption of the load, for example caused by a short-circuit in one of the components of the apparatus 13, releases the remote control switch to disconnect the apparatus.

At this point it will be clear that the intended scopes have been achieved, by providing a protective device which not only disconnects the power in the event of current leakage, but also carries out important preventive functions capable of averting conditions of real danger, which are usually ignored by the known electrical protective devices.

The foregoing description of an embodiment applying the innovative principles of this invention is obviously given by way of example in order to illustrate such innovative principles and should not therefore be understood as a limitation to the sphere of the invention claimed herein.

For example, the device can be made with hard-wired logic or with a suitably programmed microprocessor, as can be easily imagined by the expert. In the case of a microprocessor it can be the same one which governs the normal functions of the apparatus 13. The testing 30 and resetting 55 buttons, as well as the optical indicators 29, 34, 40, 43, 48 can be disposed on a control panel of the apparatus 13.

In particular, the optical indicators can be of various known types, such as light bulbs, LEDs, or even a graphic and/or alphanumerical display, showing explicative icons or written messages concerning the various functions. In addition to being made with a ringer or buzzer, the sound indicator can also comprise a voice generator for emission of spoken messages.

## Claims

1. A device for electrical protection against current leakages in an apparatus (13) powered by an electrical network (11, 11), in particular a sanitary appliance, comprising a differential detector (16) of the currents absorbed along two power supply conductors of the apparatus, the differential detector (16) having an output representing a difference value of said absorbed currents, a comparator (23) comparing said difference value with a first threshold value (25) which is pre-established as being the maximum acceptable leakage value and emitting a first alarm signal (26, 28) when the difference value exceeds said threshold value, the alarm signal (26) actuating a device (14, 15, 27) for disconnecting the apparatus from the electrical network, a testing element (30, 31) having an actuating control to induce the differential detector (16) to emit a difference value (18) higher than said first threshold value (24), characterized by the fact that the operation of the testing element (30, 31) produces a signal (32) for starting up a timer (56), the timer emitting a time lapsed signal (33) when a pre-established period of time has elapsed after its start up, in order to indicate the need to carry out a further operation of the testing element (30, 31) after the pre-established time has elapsed.

2. Device as claimed in claim 1, characterized by the fact that the time lapsed signal (33) is sent by an optical/acoustical warning device (34, 35).

3. Device as claimed in claim 1, characterized by the fact that the time lapsed signal (33) is sent to the testing element (30, 31) to cause its operation.

4. Device as claimed in claim 1, characterized by the fact of comprising a detector (36) emitting a signal (37) indicating the presence of voltage on the line downstream to the device for disconnection (14) of the apparatus (13), a comparator element (38) emitting a second alarm signal (39) upon simultaneous presence of the first alarm signal (28) and the signal indicating the presence of voltage on the line (37), in order to indicate the failure to disconnect the electrical appliance.

5. Device as claimed in claim 3, characterized by the fact of comprising a detector (36) emitting a signal (37) indicating voltage on the line downstream to the device for disconnection of the apparatus (13), a comparator element (41) emitting a third alarm signal (42) upon simultaneous presence of the time lapsed signal (33) and the signal indicating the presence of voltage on the line (37), in order to indicate the failure to disconnect the electrical appliance after operation of the testing element.

6. Device as claimed in claim 1, characterized by the fact that the output (18) of the differential detector (16) is connected to a second comparator (44) comparing said difference value with a pre-established second threshold value (45), lower than the first threshold value (24), and emitting a pre-alarm signal (47) when the difference value exceeds said second threshold value.

7. Device as claimed in claim 1, characterized by the fact of comprising a device (50) for measuring the current absorbed by the apparatus (13), which emits a signal (49) representing the value of said absorbed current, a comparator (51) comparing said signal (49) with a maximum current threshold value (52), and emitting an alarm signal (54) when the current value exceeds said threshold value, the alarm signal (54) actuating the device (14, 15, 27) for disconnection of the apparatus (13) from the power supply network.

8. Device as claimed in claims 1, 4, 5 and 6, characterized by the fact of comprising an alarm system (29, 34, 35, 40, 43, 48), emitting optical/acoustic signals upon detecting alarm signals chosen from said first, second, third alarm signals and said pre-alarm signal.

9. Method for electrical protection against current leakages in an apparatus powered by an electrical network, in particular a sanitary appliance, comprising the steps of:
- measuring the differential value of the currents absorbed along two power supply conductors of the apparatus;
- comparing the differential value with a pre-defined first threshold value which is pre-established as being the maximum acceptable leakage value;
- disconnecting the apparatus from the electrical network when the differential value exceeds the first threshold value; the method comprising the further steps of:
- inducing a difference value higher than said first threshold value to test whether the disconnection is carried out correctly;
- starting up a timer upon induction of the difference value, the timer emitting a time lapsed signal when a pre-established period of time has elapsed after its start up.

10. Method as claimed in claim 9, characterized by the fact of further comprising the step of again inducing a difference value higher than said first threshold value to test whether the disconnection is carried out correctly upon indication by the timer that the pre-established period of time after its start up has elapsed.

11. Method as claimed in claim 9, characterized by the fact of further comprising the step of comparing the differential value with a pre-established second threshold value, lower than the first threshold value and of emitting a pre-alarm signal when the differential value exceeds said second threshold value.

12. Method as claimed in claim 9, characterized by the fact of further comprising the step of checking that the apparatus has been effectively disconnected from the power supply network and of emitting an alarm signal if the apparatus is still connected to the power supply network.
